(19) Europäisches Patentamt
European Patent Office
Office européen des brevets

(11) Veröffentlichungsnummer: **0 055 433**
**B1**

(12) # EUROPÄISCHE PATENTSCHRIFT

(45) Veröffentlichungstag der Patentschrift: **12.06.85**

(51) Int. Cl.⁴: **C 08 G 65/32**, C 08 G 65/28, C 08 G 59/14, C 10 G 33/04, B 01 D 17/04

(21) Anmeldenummer: **81110573.3**

(22) Anmeldetag: **18.12.81**

(54) **Oxalkylierte Additionsprodukte aus Ethylenoxid-Propylenoxid-Blockpolymeren und Bis-glycidylethern und deren Verwendung.**

(30) Priorität: **30.12.80 DE 3049450**

(43) Veröffentlichungstag der Anmeldung: **07.07.82 Patentblatt 82/27**

(45) Bekanntmachung des Hinweises auf die Patenterteilung: **12.06.85 Patentblatt 85/24**

(84) Benannte Vertragsstaaten: **DE GB IT NL**

(56) Entgegenhaltungen:
**DE - B - 1 018 179**
**US - A - 3 078 271**
**US - A - 3 383 326**
**US - A - 3 676 501**
**US - A - 4 175 054**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Diery, Helmut, Dr., Theresenstrasse 45, D-6233 Kelkheim (Taunus) (DE)**
Erfinder: **Hille, Martin, Dr., In den Eichen 46, D-6237 Liederbach (DE)**

**EP 0 055 433 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Der grösste Teil des geförderten Rohöls fällt als Wasser-in-Öl-Emulsionen an. Nur in der Anfangsphase eines Ölfeldes wird praktisch reines Rohöl produziert. Nach einer bestimmten Zeit steigt dann der Wassergehalt im Rohöl, vornehmlich beginnend mit den am Ölfeldrand gelegenen Sonden, an. Das Wasser muss vor dem Transport abgetrennt bzw. unter eine akzeptable Konzentration abgesenkt werden. Dies erfolgt allgemein durch den Zusatz geringer Mengen an Tensiden, genannt Demulgatoren oder Emulsionsspalter, wobei die meisten Rohöle erwärmt werden. Gute Demulgatoren senken den Wassergehalt im Rohöl, den Ölgehalt im abgetrennten Wasser und den Salz- sowie Aschegehalt im Rohöl bei möglichst geringen Anwendungskonzentrationen und niedrigen Temperaturen sowie kurzer Einwirkzeit auf die geforderten Werte herab. Die Rohöle sind weltweit sehr verschieden und deshalb sind zur Erreichung optimaler Demulgierergebnisse viele Arten von Emulsionsspaltern im Einsatz. Bei den anfallenden und zu verarbeitenden grossen Mengen an Rohölemulsionen besteht daher ein grosses Interesse an verbesserten Demulgatoren, denn schon eine geringe Absenkung der Aufbereitungstemperatur, des Salz- und Wassergehaltes im Rohöl oder des Ölgehaltes im Wasser bringt signifikante wirtschaftliche Vorteile.

Stark verbreitet ist die Demulgierung der Rohöle mit Umsetzungsprodukten von Alkylenoxiden mit Alkylphenolformaldehydharzen. Produkte dieses Typs sind beispielsweise in US-A-2 499 368, 2 499 370, 2 524 889, 2 560 333 und 2 574 543 beschrieben. Die nächst grössere Gruppe von Demulgatoren sind Block- und Mischpolymerisate aus Propylen- und Ethylenoxid z.B. gemäss FR-A-1 069 615 und DE-B-1 018 179. Man erhält weiterhin effektive Demulgatoren durch die Vernetzung der Block- und Mischpolymerisate aus Propylen- und Ethylenoxid untereinander und mit oxalkylierten Alkylphenolformaldehydharzen. Als Vernetzungsmittel dienen dabei Verbindungen wie Phosphorchloride, Diisocyanate, Dicarbonsäuren und Phenolformaldehydharzkörper.

Bekannt ist auch die Verwendung als Erdölspalter von Umsetzungsprodukten aus Ethylenoxid/Propylenoxid-Blockpolymerisaten und Bis-Glycidyläthern (US-A 3 383 326). Diese Umsetzungsprodukte können noch weiter modifiziert werden durch Reaktion mit einem oxalkylierten Phenol-Formaldehyd-Harz (US-A 3 676 501). Auch Additionsprodukte von Polyepoxiden und Aminen, die anschliessend noch oxalkyliert werden, können als Erdölspalter dienen (US-A 3 078 271).

Es wurde nun gefunden, dass oxalkylierte Additionsprodukte aus Ethylenoxid-Propylenoxid-Blockpolymerisaten und Bis-glycidylethern bessere Demulgierergebnisse als die bisher bekannten Demulgatoren erbringen.

Gegenstand der Erfindung sind somit oxalkylierte Additionsprodukte aus Ethylenoxid-Propylenoxid-Blockpolymerisaten und Bis-glycidylethern, die erhalten werden durch Addition von Ethylenoxid-Propylenoxid-Blockpolymerisaten der Formel

$$HO(CH_2CH_2O)_m-(CH_2\underset{\underset{R}{|}}{C}HO)_p-(CH_2CH_2O)_nH$$

worin R Methyl oder Ethyl bedeutet, n und m Zahlen sind, die so gewählt sind, dass der Anteil der Polyethylenoxidgruppen 5 bis 80% des Molekulargewichtes des Blockpolymerisats beträgt und p ist eine Zahl grösser als 10 an Bis-glycidylether der Formel

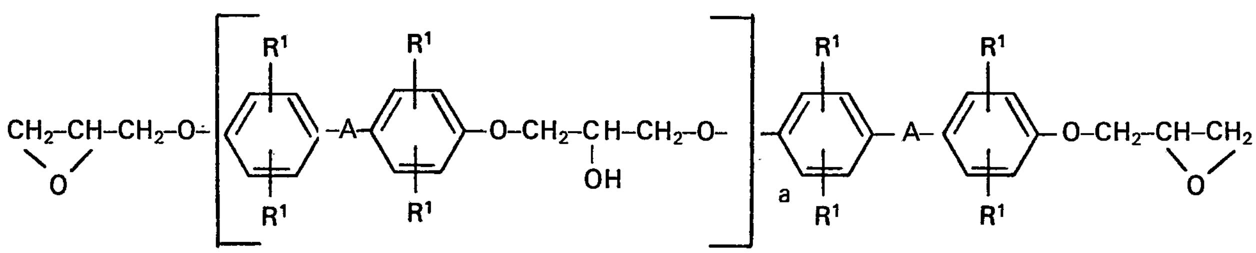

worin $R^1$ gleich oder verschieden sein können und Wasserstoff, $C_1$–$C_4$-Alkyl oder Halogen, insbesondere Chlor, A eine direkte Bindung, eine Sulfonyl- oder Cyclohexylgruppe oder eine Gruppe der Formel

$$R^2-\underset{|}{\overset{|}{C}}-R^2$$

$R^2$ Wasserstoff, Methyl oder Phenyl und a eine ganze Zahl von 0 bis 10 bedeutet, sowie anschliessende Oxalkylierung mit Propylenoxid oder Butylenoxid und gegebenenfalls Ethylenoxid, wobei die Menge des zuletzt addierten Propylenoxids oder Butylenoxids 1 bis 90 Gew.-% des Gesamtmoleküls, vorzugsweise 25–75 Gew.-%, und die Menge des gegebenenfalls zusätzlich addierten Ethylenoxids bis 50 Gew.-% des Gesamtmoleküls beträgt.

Als Ethylenoxid-Propylenoxid-Blockpolymerisate werden solche Produkte eingesetzt, die durch Oxethylierung eines Polypropylenoxids mit einem Molgewicht von mindestens 600 hergestellt werden. Vorzugsweise geht man aus von einem Polypropylenoxid mit einem Molgewicht von 1000 bis 3500. Das Propylenoxid kann auch teilweise durch Butylenoxid ersetzt werden. Der Anteil der Polyethylenoxidgruppen am Gesamtmolekül des Blockpolymers wird so gewählt, dass er mindestens 5%, bevorzugt 10 bis 80% ausmacht.

Die Bis-glycidylether gewinnt man in bekannter Weise aus den entsprechenden Bis-phenolen. Hierfür kommen unter anderem folgende Bisphenole in Frage:
Bis-(4-hydroxyphenyl)-methan, Bis-(4-hydroxy-3-methylphenyl)-methan, Bis-(4-hydroxy-3,5-dichlorphenyl)-methan, 1,1-Bis-(4-hydroxyphenyl)-ethan, 2,2-Bis-(4-hydroxyphenyl)-propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, Bis-(4-hydroxyphenyl)-phenylmethan, Bis-(4-hydroxyphenyl)-diphenylmethan, 1,1-Bis-(4-hydroxyphenyl)cyclohexan, 4,4'-Dihydroxydiphenyl, 4,4'-Dihydroxy-diphenylsulfon.

Darüberhinaus kommen als Bis-glycidylether auch Epoxyharze in Frage gemäss der oben angegebenen Formel.

Die Umsetzung der Ethylenoxid-Propylenoxid-Blockpolymeren mit den Bis-glycidylethern erfolgt bei Temperaturen zwischen 70 und 160 °C, bevorzugt 80 bis 120 °C. Die Reaktion erfolgt im allgemeinen ohne Lösungsmittel, doch ist es auch möglich, die Reaktion in einem inerten organischen Lösungsmittel durchzuführen. Das Molverhältnis des Propylenoxid/Ethylenoxid-Blockpolymeren zum Bisepoxid liegt bei 1:0,6 bis 1:1, wobei das Verhältnis 1:1 wegen des Auftretens von Vernetzungsreaktionen und der damit verbundenen Bildung gallertiger Produkte nicht überschritten werden sollte. Dabei kann es zweckmässig sein, die Gesamtmenge an Bisepoxid in zwei bis drei Anteilen im Laufe der Reaktion zuzugeben. Die Reaktion erfolgt in Gegenwart eines alkalisch reagierenden Katalysators oder einer Lewis-Säure. Wenn das Blockpolymere noch den bei seiner Herstellung benötigten alkalischen Katalysator, z.B. Natriumhydroxid, Kaliumhydroxid oder Natriummethylat in Form des neutralisierten Salzes enthält, wirkt dieses Salz bei der Umsetzung mit dem Bisepoxid als Katalysator. Eine erneute Zugabe eines Katalysators erübrigt sich dann. Wurde das Blockpolymere nach seiner Herstellung vom Katalysator befreit, ist die erneute Zugabe eines Katalysators vom genannten Typ notwendig. Die Dauer der Reaktion hängt ab von der Reaktionstemperatur. Die Umsetzung wird solange durchgeführt, bis eine Epoxid-Zahl von kleiner als 1 bis 2 erreicht ist.

Die so erhaltenen Additionsprodukte werden anschliessend mit einem Alkylenoxid, vorzugsweise Propylenoxid, oxalkyliert. Das Propylenoxid kann auch ganz oder teilweise durch Butylenoxid ersetzt werden. Zur Anpassung an die unterschiedlichen Eigenschaften der zu demulgierenden Rohölemulsionen kann es vorteilhaft sein, das Additionsprodukt ausser mit Propylenoxid bzw. Butylenoxid auch mit Ethylenoxid zu oxalkylieren. Hierbei kann man, wie bei derartigen Mischoxalkylierungen bekannt, auf drei verschiedenen Wegen vorgehen. So kann man zunächst die gesamte Menge an Propylenoxid addieren und dann mit Ethylenoxid oxalkylieren oder man addiert umgekehrt zunächst die gesamte gewünschte Menge an Ethylenoxid und dann erst die gesamte Menge an Propylenoxid. Ausserdem kann man auch in einer Stufe das Additionsprodukt mit einer Mischung aus der gewünschten Menge Propylenoxid und Ethylenoxid oxalkylieren.

Die Menge an Propylenoxid bzw. Butylenoxid wird so bemessen, dass der Anteil dieses in der letzten Stufe addierten Alkylenoxids 1 bis 90% beträgt bezogen auf das Molekulargewicht des zu oxalkylierenden Additionsproduktes. Wird in der letzten Stufe noch zusätzlich Ethylenoxid addiert, so kann die Menge an Ethylenoxid bis etwa 50% ausmachen bezogen auf das Molekulargewicht des Additionsproduktes einschliesslich der Anteile des am Ende addierten Propylenoxid bzw. Butylenoxid. Die Oxalkylierung erfolgt in allen Fällen unter den üblichen Bedingungen mit Alkali als Katalysator. Sie kann drucklos oder bevorzugt in Druckgefässen durchgeführt werden. Der Arbeitsdruck im letzteren Fall beträgt 2 bis 8 bar.

Die erfindungsgemässen Demulgatoren zeigen bei verschiedenen Rohölemulsionen bessere Demulgierergebnisse als sie mit bisher bekannten Emulsionsspaltern erreicht werden. Besonders signifikant ist die Überlegenheit gegenüber herkömmlichen Demulgatoren bei der Absenkung des Restsalzgehaltes im Rohöl. Diese neuen Demulgatoren können als solche direkt oder aber in Form von Lösungen, die bis zu einem Verhältnis von 1:200 mit organischen Lösungsmitteln verdünnt wurden, eingesetzt werden. Die Anwendungskonzentration der Demulgatoren für die zu trennenden Rohölemulsionen liegt im allgemeinen zwischen 2 und 400, vorzugsweise 5 und 50 ppm.

In den folgenden Beispielen A–H wird zunächst die Herstellung der Additionsprodukte aus Bisepoxiden und Bisphenolen oder Epoxidharzen und Ethylenoxid/Propylenoxid-Blockpolymerisaten als Ausgangsprodukte für die erfindungsgemässen Oxalkylierungsprodukte beschrieben.

Beispiele für die Herstellung der Ausgangsprodukte

Beispiel A

In einem zylindrischen 1 Liter-Planschliff-Gefäss mit Ankerrührer, Innenthermometer und Kühler mit $CaCl_2$-Feuchtigkeitsabschluss werden 561 Gewichtsteile eines Ethylenoxid/Propylenoxid-Blockpolymerisats mit einem Polypropylenoxid-Block vom Molekulargewicht ca. 1800 und 40% Polyethylenoxid im Gesamtmolekül (Genapol PF 40$^{(R)}$) (mittleres Molgewicht 2805 aus der OH–Zahl = 40 berechnet) und 45,1 Gewichtsteile eines Bisglycidylethers von Bisphenol A (Mol 376 ber. aus Epoxidzahl) vorgelegt. Nach $^1/_2$-stündigem Rühren bei Raumtemperatur wird auf eine Innentemperatur (ti) von 80 °C erwärmt. Nach 8 Stunden wird ein zweiter Anteil von 18.8 Gewichtsteilen des Bisglycidylethers zugegeben, weitere 8 Stunden bei ti =80 °C gerührt sowie anschliessend noch 8 Stunden bei ti=110 °C. Die Gesamtreaktionszeit beträgt 24 Stunden. Die Epoxidzahl der Mischung geht dabei auf unter 1–2 zurück. Trübungspunkt 64–65 °C (in Butyldigylkol/Wasser nach DIN 53917).

Beispiel B

a) In einem 2 Liter Planschliffgefäss mit Ankerrührer, Kühler und Innenthermometer werden 623,2 Gewichtsteile eines Blockpolymerisats mit einem Polypropylenoxid-Block vom Molgewicht 1750 und 40% Polyethylenoxid im Gesamtmolekül (Handelsname Pluriol PE 6400(R) mit Molgewicht von 3116 aus der OH-Zahl berechnet) mit 0,208 Gewichtsteilen $BF^3$-Etherat versetzt und 15 Minuten bei Raumtemperatur verrührt. Anschliessend werden 67,9 Gewichtsteile des Bisglycidylethers von Bisphenol A (Mol 376) zugesetzt und 10 Stunden bei 120 °C gerührt. Man erhält eine gelbe, blanke, mittelviskose Flüssigkeit, deren Epoxidzahl bei 1 liegt. Trübungspunkt nach DIN 53917 = 41 °C.

b) Wird die Umsetzung anstelle des Borfluorids-Etherats mit 8,2 Gewichtsteilen Natrium-Stearat durch 15 stündiges Rühren bei 140 °C durchgeführt, so erhält man ein trübes, rötlichbraunes Reaktionsprodukt, das unter Zusatz von 10 Gewichtsteilen Celite(R) heiss zu einer blanken Flüssigkeit filtriert werden kann.

Trübungspunkt nach DIN 53917=61 °C, Epoxidzahl kleiner als 1.

Beispiel C

Wird im Beispiel B/a der Bisglycidylether von Bisphenol A durch 336,8 Gewichtsteile eines Epoxidharzes der Formel

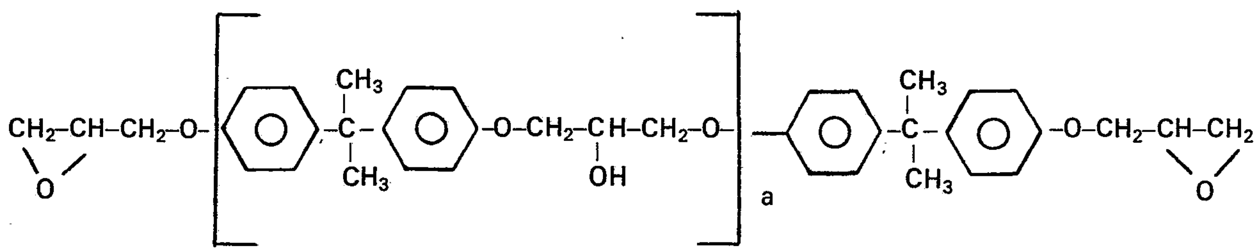

a=5–6, mit der Epoxidzahl 39 ersetzt und 28 Stunden bei 120 °C gerührt, so wird eine Epoxidzahl von 4–5 erreicht. Bei nochmaligem Zusatz von 0,2 Gewichtsteilen Borfluorid-Etherat und weiterer Umsetzung bei 120 °C über acht Stunden geht die Epoxidzahl auf unter 1 zurück. Man erhält eine gelbe, hochviskose Flüssigkeit. Trübungspunkt nach DIN 53917=45 °C.

Beispiel D

Bei Ersatz des Epoxidharzes aus Beispiel C durch 168,4 Gewichtsteile eines Epoxidharzes mit der Epoxidzahl 77/78 (a≈2,4), wobei 28 Stunden bei 120 °C unter Zusatz von 0,2 Gewichtsteilen Borfluorid-Etherat gerührt wird, erhält man eine blanke, gelbstichige, hochviskose Flüssigkeit.

Trübungspunkt nach DIN 53917=45 °C.

Beispiel E

a) In einem 2 Liter Planschliffgefäss wie in Beispiel B/a ausgerüstet werden 975,6 Gewichtsteile eines Ethylenoxid/Propylenoxid-Blockpolymerisates mit einem Polypropylenoxid-Block vom Molekulargewicht ca. 1600 umd 20% Polyethylenoxid im Gesamtmolekül (Handelsname Genapol PF 20(R)) und 89,3 Gewichtsteile des Bisglycidylethers von Bisphenol A (Epoxidzahl 196) 8 Stunden bei 80 °C gerührt. Es werden weitere 37,2 Gewichtsteile des Bisglycidylethers zugegeben und noch 8 Stunden bei 80 °C und 8 Stunden bei 110 °C umgesetzt. Das flüssige Reaktionsprodukt hat eine Epoxidzahl kleiner als 1.

Trübungspunkt nach DIN 53917=51 °C.

b) Das in Beispiel E/a verwendete Blockpolymerisat wird durch 2301,6 Gewichtsteile eines Ethylenoxid/Propylenoxid-Blockpolymerisats mit 80% Polyethylenoxid im Gesamtmolekül (Handelsname Genapol PF 80(R) OH-Zahl 19/20) ersetzt. Die Reaktionszeit bei 110 °C wird hierbei auf 8 Stunden verlängert. Das weisse, wachsartige Reaktionsprodukt hat eine Epoxidzahl von ≈1. Trübungspunkt nach DIN 53917=90 °C.

Beispiel F

In einem 2 Liter Planschliffgefäss wie in Beispiel B/a werden 561 Gewichtsteile eines Ethylenoxid/Propylenoxid-Blockpolymerisats wie in Beispiel A und 224,6 Gewichtsteile eines Epoxidharzes (Beispiel C a=5–6) mit der Epoxidzahl 39 vorgelegt und 24 Stunden bei 80 °C langsam gerührt. Die Epoxidzahl geht dabei auf 1 zurück, und es wird ein hochviskoses Produkt erhalten, das anschliessend der Umsetzung mit Propylenoxid unterworfen wird (folgendes Beispiel 7).

Beispiel G

In einem 1 Liter-Planschliffgefäss wie in Beispiel 4A beschrieben, werden 437,5 Gewichtsteile eines Ethylenoxid/Propylenoxid-Blockpolymerisats mit einem Polypropylenoxid-Block vom Molekulargewicht 3500 und 60% Polyethylenoxid im Gesamtmolekül und 67,0 Gewichtsteilen des Bisglycidylethers von Bisphenol A (Mol 372 ber. aus Epoxidzahl) bei t=80 °C 8 Stunden gerührt. Anschliessend werden weitere 27,9 Gewichtsteile des Bisglycidylethers zugesetzt. Die Umsetzung wird durch Rühren von 8 Stunden bei 80 °C und von 8 Stunden bei 110 °C zu Ende geführt. Das hellbraune wachsartige Reaktionsprodukt zeigt eine Epoxidzahl = 3.

Trübungspunkt nach DIN 53917=85 °C.

Beispiel H

411,6 Gewichtsteile eines Blockpolymerisates mit einem Polypropylenoxid-Block vom Molgewicht 1750 und 10% Polyethylenoxid im Gesamtmolekül (Handelsname Pluriol PF 6100(R)) werden in der Apparatur von Beispiel B mit 5,4 Gewichtsteilen Natrium-isostearat versetzt. Dann werden 67,0 Gewichtsteile des Bisglycidylethers von Bisphenol A zugesetzt und 32 Stunden bei 140 °C gerührt. Die Epoxidzahl des flüssigen Reaktionsproduktes geht dabei auf 1 zurück.

Beispiele für die Herstellung der erfindungsgemässen Verbindungen

Beispiel 1

a) In einem 30 Liter V4A-Autoklaven mit Rührung und Temperaturmessung werden 4454 Gewichtsteile des nach Beispiel A hergestellten Additionsproduktes und 22,3 Gewichtsteile einer 30 %igen methanolischen Natrium-methylat-Lösung vorgelegt und die Apparatur mit Stickstoff gespült. Im Verlauf von 4 Stunden werden bei ti = 160–180 °C und bei einem Druck von 4–5 bar 4774 Gewichtsteile Propylenoxid eingedrückt und eine Stunde bei ti = 150–160 °C nachgerührt. Das Reaktionsprodukt der Oxpropylierung enthält 51,7% Polypropylenoxid und wird mit 15 Gewichtsteilen Eisessig auf pH = 7 eingestellt.

Trübungspunkt nach DIN 53917 = 35 °C.

b) Werden unter denselben Bedingungen wie in Beispiel 1a 2880 Gewichtsteile des Additionsproduktes aus Beispiel A mit 620 Gewichtsteilen Propylenoxid oxpropyliert, so enthält das rotbraune flüssige Reaktionsprodukt 17,7% Polypropylenoxid.

Trübungspunkt nach DIN 53917 = 63–64 °C.

c) Wie in Beispiel 1a werden 2880 Gewichtsteile des Reaktionsproduktes aus Beispiel A mit einer Mischung aus 635 Gewichtsteilen Ethylenoxid und 1785 Gewichtsteilen Propylenoxid in Gegenwart von 24 Gewichtsteilen einer 30%igen Natrium-methylat-Lösung oxalkyliert. Das Reaktionsprodukt enthält 13,6% Ethylenoxid und 370 % Propylenoxid, das sind 50,6% Ethylenoxid/ Propylenoxid als Mischoxalkylat, und stellt eine rotbraune Flüssigkeit dar.

Trübungspunkt nach DIN 53917 = 50 °C.

Beispiel 2

a) In einem 2 Liter V4A-Autoklaven mit Rührung und Innenthermometer werden 435 Gewichtsteile des Reaktionsproduktes aus Beispiel E/a mit 2 Gewichtsteilen einer 30%igen Na-methylat-Lösung in Methanol vorgelegt. Bei ti = 160–170 °C und einem Druck von 4–5 bar werden innerhalb von 30 Minuten 180 Gewichtsteile Propylenoxid zugedrückt und 1 Stunde nachgerührt. Das braune mittelviskose Reaktionsprodukt enthält 29,2% Polypropylenoxid.

Trübungspunkt nach DIN 53917 ≈ 38 °C.

b) Unter denselben Bedingungen wie in Beispiel 2a werden 354 Gewichtsteile des dort verwendeten Ausgangsproduktes mit 312 Gewichtsteilen Propylenoxid umgesetzt, so dass ein Oxpropylierungsprodukt mit 46,8% Polypropylenoxid erhalten wird.

Trübungspunkt nach DIN 53917 ≈ 28 °C.

Beispiel 3

a) In der Oxalkylierungsapparatur von Beispiel 2 werden 300 Gewichtsteile des Reaktionsproduktes aus Beispiel E/b mit 314 Gewichtsteilen Propylenoxid umgesetzt. Es wird ein braunes weiches Festprodukt, das 51,1% Polypropylenoxid enthält, erhalten.

Trübungspunkt nach DIN 53917 ≈ 18 °C.

b) Wird wie in Beispiel 3a soviel Propylenoxid angelagert, dass ein Umsetzungsprodukt mit 75,0 % Polypropylenoxid resultiert, so wird eine braune Paste mit einem Trübungspunkt nach DIN 53917 von ca. 10 °C erhalten.

Beispiel 4

a) In der Oxalkylierungsapparatur von Beispiel 2 werden 547 Gewichtsteile des gemäss Beispiel 1a hergestellten Oxpropylierungsproduktes mit 2 Gewichtsteilen Natriumethylat vorgelegt. Bei Ti = 160–180 °C werden 96,5 Gewichtsteile Ethylenoxid eingeleitet, so dass das Endprodukt zusätzlich 15,0% Polyethylenoxid im Gesamtmolekül enthält. Das Reaktionsprodukt stellt eine mässig viskose Flüssigkeit dar.

Trübungspunkt nach DIN 53917 = 38 °C.

b) Wird wie in Beispiel 4 a soviel Ethylenoxid angelagert, dass das Endprodukt 29,3% Polyethylenoxid enthält, so wird ein flüssiges Produkt mit dem Trübungspunkt nach DIN 53917 = 53 °C erhalten.

c) Wenn die Oxethylierung wie in Beispiel 4 a mit soviel Ethylenoxid durchgeführt wird, dass im Endprodukt 46,5% Polyethylenoxid zusätzlich enthalten sind, so wird ein Produkt mit pastöser Konsistenz erhalten.

Trübungspunkt nach DIN 53917 = 71 °C.

Beispiel 5

In der 2 Liter V4A-Oxalkylierungsapparatur von Beispiel 2 werden 319 Gewichtsteile des Reaktionsproduktes aus Beispiel C in Gegenwart von 10 Gewichtsteilen einer 30%igen Natrium-methylat-Lösung in Methanol mit 123 Gewichtsteilen Propylenoxid innerhalb 1 Stunde und 45 Minuten bei ti = 160–170 °C bei 4–5 bar umgesetzt. Nach 1-stündigem Nachrühren wird ein flüssiges viskoses Reaktionsprodukt erhalten, das 27,8% Polypropylenoxid enthält.

Trübungspunkt nach DIN 53917 = 32 °C.

Beispiel 6

Unter denselben Bedingungen wie in Beispiel 5 werden 256 Gewichtsteile des Reaktionsproduktes aus Beispiel D in Gegenwart von 8 Gewichtsteilen einer 30%igen Natriummethylat-Lösung in Methanol mit 106 Gewichtsteilen Propylenoxid umgesetzt. Das flüssige Reaktionsprodukt enthält 29,2% Polypropylenoxid.

Trübungspunkt nach DIN 53917 = 43 °C.

Beispiel 7

In der 2-Liter V4A-Apparatur von Beispiel 2 werden 365 Gewichtsteile des Reaktionsproduktes von Beispiel F in Gegenwart von 5 Gewichtsteilen einer 30%igen methanolischen Na-methylat-Lösung mit 161 Gewichtsteilen Propylenoxid unter den üblichen Bedingungen umgesetzt. Das flüssige Reaktionsprodukt enthält 30,6% Polypropylenoxid und ist bei der Bestimmung des Trübungspunktes nach DIN 53917 bei −5 °C noch trüb.

Beispiel 8

350 Gewichtsteile des Umsetzungsproduktes aus Beispiel B/a werden in Gegenwart von einem Gewichtsteil pulverisiertem Ätznatron mit 110 Gewichtsteilen Propylenoxid unter Druck umgesetzt. Das flüssige Reaktionsprodukt enthält 23,9 % Polypropylenoxid und weist einen Trübungspunkt von 34,2 °C auf (nach DIN 53917).

Beispiel 9

In der Oxalkylierungsapparatur von Beispiel 2 werden 476 Gewichtsteile des nach Beispiel A hergestellten Additionsproduktes und 4,8 Gewichtsteile einer 30%igen methanolischen Na-methylat-Lösung vorgelegt. In der üblichen Weise wird mit einer Mischung aus 357 Gewichtsteilen Propylenoxid und 131 Gewichtsteilen Ethylenoxid bei ti = 160–170 °C und 4–5 bar innerhalb von 1 Stunde oxalkyliert. Das rotbraune blanke flüssige Endprodukt enthält 36,8% Propylenoxid und 13,5% Ethylenoxid als Mischoxalkylat.

Trübungspunkt nach DIN 53971 = 50 °C.

Beispiel 10

424 Gewichtsteile des nach Beispiel A hergestellten Additionsproduktes werden in Gegenwart von 7,0 Gewichtsteilen Na-methylatlösung (30%ig in Methanol), wobei das Methanol am Vakuum abgezogen wird, in der Oxalkylierungsapparatur von Beispiel 2 mit 136 Gewichtsteilen Isobutylenoxid (2,2-Dimethyloxiran) unter den üblichen Bedingungen umgesetzt. Das Reaktionsprodukt enthält 24,2% Polybutylenoxid. Nach Neutralisation mit Eisessig auf pH = 6,1 wird eine weiche Paste erhalten, die in Wasser milchig-trüb löslich ist.

Beispiel 11

Werden 364 Gewichtsteile des nach Beispiel A hergestellten Reaktionsproduktes unter denselben Bedingungen mit 375 Gewichtsteilen n-Butylenoxid (n-Butylenoxid-1,2) umgesetzt und anschliessend mit Eisessig auf pH = 6,5 eingestellt, so wird ein blankes flüssiges Reaktionsprodukt erhalten, das in Wasser eine trübe Lösung ergibt. Das Reaktionsprodukt enthält 50,6% Polybutylenoxid.

Beispiel 12

389 Gewichtsteile des nach Beispiel G hergestellten Additionsproduktes werden in Gegenwart von 5 Gewichtsteilen Na-methylatlösung (30%ig in Methanol) unter den in den obigen Beispielen beschriebenen Bedingungen mit 382 Gewichtsteilen Propylenoxid umgesetzt. Das Umsetzungsprodukt enthält 49,2% Polypropylenoxid und stellt eine braune Paste dar.

Trübungspunkt nach DIN 53917 = 24 °C.

Beispiel 13

221 Gewichtsteile des nach Beispiel H hergestellten Additionsproduktes werden unter den üblichen Bedingungen mit 198 Gewichtsteilen Propylenoxid oxpropyliert. Das mit Eisessig neutralisierte Reaktionsprodukt ist rotbraun und in Wasser unlöslich.

Anwendungsbeispiele

In den folgenden Tabellen sind die Ergebnisse zusammengefasst, die man bei der Spaltung von drei verschiedenen Rohölemulsionen mit den erfindungsgemässen Produkten der Beispiele 1 bis 13 erhält.

Es wurden jeweils 50%ige Lösungen der Demulgatoren in Methanol verwendet, weil die reinen Substanzen hochviskose, schlecht dosierbare Substanzen sind. Wegen der sehr geringen Anwendungsmenge erfolgt die Zugabe der 50%igen Lösungen mit Feindosiergeräten. In den Versuchstabellen werden die aus den Emulsionen in bestimmten Zeiten abgeschiedenen Wassermengen in% angegeben. Der absolute Wassergehalt der Emulsionen wurde vorher nach Dean-Rusk bestimmt. Dosiermenge, Wassergehalt der Emulsion, Demulgiertemperatur und Ursprung der Rohölemulsion sind in den einzelnen Tabellen angegeben.

Tabelle 1

Demulgiertemperatur: 35 °C
Wassergehalt der Emulsion: 56%
Dosiermenge: 40 ppm
Ursprung: BRD/Emsland

| Beispiel | Minuten 15 | 30 | 45 | 60 | 100 | 200 |
|---|---|---|---|---|---|---|
| 1a | 28 | 58 | 87 | 100 | 100 | 100 |
| 1b | 8 | 28 | 51 | 78 | 90 | 96 |
| 1c | 9 | 32 | 56 | 76 | 92 | 97 |
| 2a | 18 | 42 | 63 | 82 | 94 | 100 |
| 2b | 25 | 53 | 79 | 91 | 100 | 100 |
| 3a | 6 | 24 | 45 | 58 | 77 | 90 |
| 3b | 3 | 20 | 42 | 54 | 72 | 88 |
| 4a | 16 | 40 | 65 | 85 | 97 | 100 |
| 4b | 10 | 34 | 56 | 81 | 94 | 98 |
| 4c | 8 | 24 | 38 | 58 | 72 | 88 |
| 5 | 12 | 38 | 58 | 79 | 87 | 97 |
| 6 | 9 | 35 | 52 | 76 | 85 | 94 |
| 7 | 8 | 34 | 56 | 75 | 82 | 94 |
| 8 | 15 | 38 | 58 | 78 | 92 | 98 |
| 9 | 22 | 40 | 62 | 80 | 93 | 100 |
| 10 | 12 | 32 | 52 | 78 | 92 | 96 |
| 11 | 8 | 26 | 46 | 68 | 84 | 82 |
| 12 | 14 | 32 | 52 | 74 | 96 | 100 |
| 13 | 18 | 50 | 77 | 90 | 100 | 100 |

Tabelle 2

Demulgiertemperatur: 30 °C
Wassergehalt der Emulsion: 42%
Dosiermenge: 20 ppm
Ursprung: Saudi Arabien, leicht

| Beispiel | Minuten 15 | 30 | 45 | 60 | 100 | 200 |
|---|---|---|---|---|---|---|
| 1a | 24 | 52 | 82 | 94 | 100 | 100 |
| 1b | 16 | 28 | 42 | 62 | 82 | 94 |
| 1c | 14 | 26 | 44 | 58 | 80 | 92 |
| 2a | 18 | 44 | 70 | 85 | 95 | 98 |
| 2b | 20 | 46 | 74 | 88 | 97 | 100 |
| 3a | 12 | 22 | 32 | 52 | 72 | 84 |
| 3b | 10 | 20 | 34 | 50 | 70 | 88 |
| 4a | 20 | 42 | 68 | 82 | 93 | 98 |
| 4b | 20 | 46 | 65 | 78 | 88 | 96 |
| 4c | 14 | 20 | 32 | 51 | 72 | 86 |
| 5 | 16 | 28 | 42 | 58 | 72 | 90 |
| 6 | 16 | 22 | 38 | 57 | 76 | 92 |
| 7 | 18 | 26 | 44 | 60 | 79 | 94 |
| 8 | 16 | 40 | 72 | 82 | 90 | 96 |
| 9 | 18 | 42 | 68 | 84 | 93 | 98 |
| 10 | 12 | 34 | 62 | 76 | 86 | 95 |
| 11 | 10 | 32 | 56 | 72 | 83 | 92 |
| 12 | 18 | 40 | 65 | 78 | 88 | 97 |
| 13 | 26 | 58 | 82 | 95 | 100 | 100 |

Tabelle 3

| | |
|---|---|
| Demulgiertemperatur: | 45 °C |
| Wassergehalt der Emulsion: | 42% |
| Dosiermenge: | 50 ppm |
| Ursprung: | Persien |

| Beispiel | Minuten 15 | 30 | 45 | 60 | 100 | 200 |
|---|---|---|---|---|---|---|
| 1a | 28 | 58 | 80 | 93 | 100 | 100 |
| 1b | 18 | 32 | 58 | 74 | 88 | 98 |
| 1c | 16 | 28 | 62 | 74 | 86 | 94 |
| 2a | 20 | 48 | 72 | 91 | 96 | 98 |
| 2b | 25 | 56 | 78 | 92 | 98 | 100 |
| 3a | 12 | 23 | 36 | 54 | 76 | 92 |
| 3b | 16 | 28 | 44 | 62 | 78 | 88 |
| 4a | 22 | 52 | 74 | 88 | 94 | 100 |
| 4b | 18 | 30 | 54 | 72 | 84 | 95 |
| 4c | 12 | 22 | 38 | 56 | 78 | 90 |
| 5 | 15 | 45 | 66 | 80 | 90 | 96 |
| 6 | 18 | 43 | 70 | 78 | 86 | 95 |
| 7 | 20 | 48 | 68 | 76 | 88 | 96 |
| 8 | 20 | 46 | 72 | 86 | 93 | 98 |
| 9 | 16 | 38 | 68 | 83 | 90 | 97 |
| 10 | 12 | 32 | 62 | 72 | 82 | 85 |
| 11 | 10 | 30 | 60 | 69 | 79 | 93 |
| 12 | 24 | 58 | 77 | 90 | 95 | 100 |
| 13 | 28 | 62 | 82 | 94 | 100 | 100 |

**Patentansprüche**

1. Oxalkylierte Additionsprodukte aus Ethylenoxid-Propylenoxid-Blockpolymerisaten und Bisglycidyläthern, dadurch gekennzeichnet, dass sie erhalten werden durch Addition von Ethylenoxid-Propylenoxid-Blockpolymerisaten der Formel

$$HO(CH_2CH_2O)_m-(CH_2\underset{\substack{|\\R}}{C}HO)_p-(CH_2CH_2O)_nH$$

worin R Methyl oder Ethyl bedeutet, n und m Zahlen sind, die so gewählt sind, dass der Anteil der Polyethylenoxidgruppen 5 bis 80% des Molekulargewichtes des Blockpolymerisats beträgt und p ist eine Zahl grösser als 10 an Bis-glycidylether der Formel

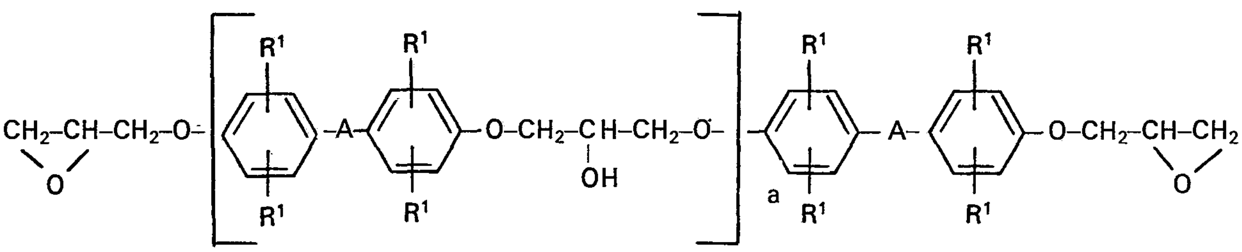

worin $R^1$ gleich oder verschieden sein können und Wasserstoff, $C_1$–$C_4$-Alkyl oder Halogen, insbesondere Chlor, A eine direkte Bindung, eine Sulfonyl- oder Cyclohexylgruppe oder eine Gruppe der Formel

$$R^2-\overset{|}{\underset{|}{C}}-R^2$$

$R^2$ Wasserstoff, Methyl oder Phenyl und a eine ganze Zahl von 0 bis 10 bedeutet, wobei das Molverhältnis des Propylenoxid/Ethylenoxid-Blockpolymeren zum Bisepoxid bei 1:0,6 bis 1:1 liegt, sowie anschliessende Oxalkylierung mit Propylenoxid oder Butylenoxid und gegebenenfalls Ethylenoxid, wobei die Menge des zuletzt addierten Propylenoxids oder Butylenoxids 1 bis 90 Gew.-% des Gesamtmoleküls und die Menge des gegebenenfalls zusätzlich addierten Ethylenoxids bis 50 Gew.-% des Gesamtmoleküls beträgt.

2. Verwendung der oxalkylierten Additionsprodukte nach Anspruch 1 zum Spalten von Rohölemulsionen.

## Revendications

1. Produits d'addition alcoylés dérivant de copolymères séquencés oxyde d'éthylène/oxyde de propylène et d'éthers bis-glycidyliques, produits caractérisés en ce qu'ils ont été obtenus par fixation de copolymères séquencés oxyde d'éthylène/oxyde de propylène répondant à la formule:

$$HO(CH_2CH_2O)_m-(CH_2\underset{\displaystyle R}{\underset{|}{C}}HO)_p-(CH_2CH_2O)_nH$$

dans laquelle R représente un radical méthyle ou éthyle, n et m représentent des nombres choisis de telle façon que la quantité des radicaux polyéthylène-oxy représente de 5 à 80% du poids moléculaire du copolymère séquencé, et p est un nombre supérieur à 10, sur des éthers bis-glycidyliques répondant à la formule:

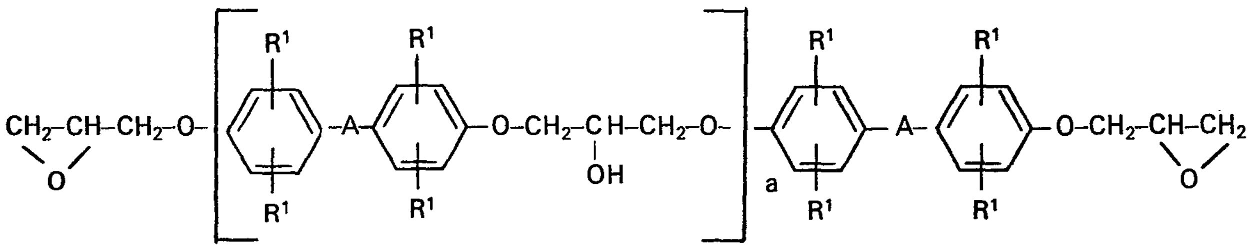

dans laquelle les $R^1$ sont identiques ou différents et représentent chacun l'hydrogène, un alkyle en $C_1$–$C_4$ ou un halogène, plus particulièrement le chlore, A représente une liaison directe, un radical sulfonyle ou cyclohexyle ou un radical de formule:

$$R^2-\overset{|}{\underset{|}{C}}-R^2$$

dans lequel $R^2$ désigne l'hydrogène, un méthyle ou un phényle, et a représente un nombre entier de 0 à 10, le rapport molaire du copolymère séquencé oxyde de propylène/oxyde d'éthylène au bis-époxyde étant compris entre 1:0,6 et 1:1, puis alcoxylation avec l'oxyde de propylène ou l'oxyde de butylène et, éventuellement, l'oxyde d'éthylène, la quantité de l'oxyde de propylène ou de l'oxyde de butylène finalement fixée représentant de 1 à 90% en poids de la molécule totale et la quantité de l'oxyde d'éthylène qui, éventuellement, a été finalement fixée représentant au plus 50% en poids de la molécule totale.

2. Application des produits d'addition alcoxylés selon la revendication 1 à la désémulsification d'émulsions de pétrole brut.

## Claims

1. An oxyalkylated addition product formed from ethylene oxide-propylene oxide block polymers and bis glycidyl ethers, which is obtained by the addition of an ethylene oxide-propylene oxide block polymer of the formula

$$HO(CH_2CH_2O)_m-(CH_2\underset{\displaystyle R}{\underset{|}{C}}HO)_p-(CH_2CH_2O)_nH$$

in which R denotes methyl or ethyl, n and m are numbers which are so chosen that the content of polyethylene oxide groups constitutes 5 to 80% of the molecular weight of the block polymer and p is a number larger than 10, to a bis-glycidylether of the formula

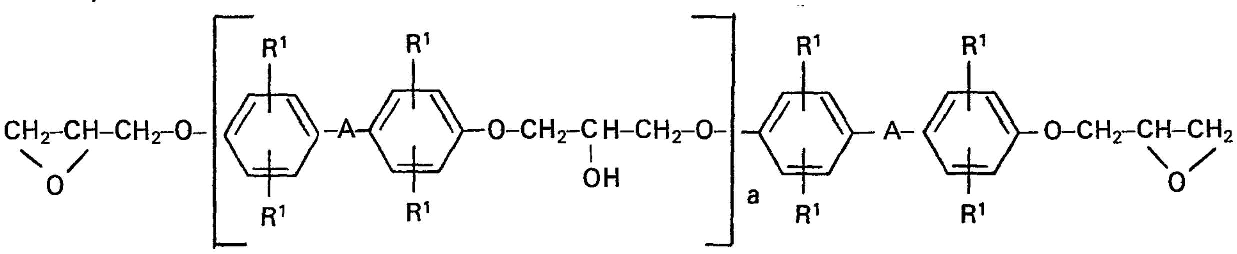

in which the $R^1$'s can be identical or different and denote hydrogen, $C_1$–$C_4$-alkyl or halogen, in particular chlorine, A denotes a direct bond, a sulfonyl or cyclohexyl group or a group of the formula

$$R^2-\overset{|}{\underset{|}{C}}-R^2$$

$R^2$ denotes hydrogen, methyl or phenyl and a is an integer from 0 to 10, the molar ratio of the propylene oxide-ethylene oxide block polymer to the bisepoxide being 1:0.6 to 1:1, and a subsequent oxyalkylation with propylene oxide or butylene oxide and, if appropriate, ethylen oxide, the amount of the propylene oxide or butylene oxide which is added last being 1 to 90% by weight of the total molecule and the amount of the ethylene oxide, which, optionally, has also been added, being up to 50% by weight of the total molecule.

2. The use of the oxyalkylated addition products as claimed in claim 1 for breaking crude oil emulsions.